# EUROPEAN PATENT SPECIFICATION

(11) **EP 3 664 060 B1**
(45) Date of publication and mention of the grant of the patent: **23.10.2024**
(21) Application number: 19171882.4
(22) Date of filing: 30.04.2019
(51) Int. Cl.: G08G 1/00, G08G 1/0967, G06Q 10/00

(54) **SCOOTER SCHEDULING METHOD AND APPARATUS, STORAGE MEDIUM AND ELECTRONIC APPARATUS**
ROLLERPLANUNGSVERFAHREN UND -VORRICHTUNG, SPEICHERMEDIUM UND ELEKTRONISCHE VORRICHTUNG
PROCÉDÉ ET APPAREIL DE PLANIFICATION DE SCOOTER, SUPPORT D'INFORMATIONS ET APPAREIL ÉLECTRONIQUE

(30) Priority: 07.12.2018 CN 201811498122
(43) Date of publication of application: 10.06.2020
(73) Proprietor: Ninebot (Beijing) Tech Co., Ltd., Beijing 100192 (CN)
(72) Inventor: WANG, Ye, Beijing, Beijing 100192 (CN); XI, Weining, Beijing, Beijing 100192 (CN); YUAN, Yubin, Beijing, Beijing 100192 (CN); CHEN, Zichong, Beijing, Beijing 100192 (CN); CHEN, Zhongyuan, Beijing, Beijing 100192 (CN)
(74) Representative: Leihkauf, Steffen Falk

(56) References cited:
- EP-A1- 0 808 492
- EP-A1- 2 889 198
- EP-B1- 0 808 492
- CN-A- 105 575 107
- DE-A1- 102015 206 342
- US-A1- 2016 063 341
- KUMRU MURAT ET AL: "Mobility-on-demand scenarios relying on lightweight autonomous and connected vehicles for large pedestrian areas and intermodal hubs", 2017 2ND IEEE INTERNATIONAL CONFERENCE ON INTELLIGENT TRANSPORTATION ENGINEERING (ICITE), IEEE, 1 September 2017 (2017-09-01), pages 178 - 183, XP033160643, ISBN: 978-1-5090-6272-0, [retrieved on 20171002], DOI: 10.1109/ICITE.2017.8056904

## Description

### Technical Field

The present disclosure relates to the field of communication, and in particular to a scooter scheduling method and apparatus, a storage medium and an electronic apparatus.

### Background

Along with the development of science and technology, a scooter is becoming increasingly popular in lives of ordinary people. With characteristics such as a wheel is small and a handle and a scooter body are often foldable, the scooter is very portable. In general, the scooter may be unpowered and may also be electric. Meanwhile, with the booming development of the sharing economy, a sharing electric scooter is gradually gaining a wide commercial prospect. For this reason, the scheduling of the sharing electric scooter is a problem that also needs to be considered. For a scheduling manner in which the scooter is carried manually, the efficiency is low; and with the increase of the number of the scooters, the above-mentioned manual scheduling manner needs to consume a lot of manpower and material resources.

Therefore, there arises the problem that the scooter cannot be scheduled effectively because a lot of manpower and material resources need to be consumed to schedule the scooter in the related art.

For the above problem in the related art, an effective solution hasn't been proposed yet till now.

The document CN105575107 discloses a method for controlling autonomous scooters.The document "Mobility-on-demand scenarios relying on lightweight autonomous and connected vehicles for large pedestrian areas and intermodal hubs" 2017 2nd IEEE International Conference on Intelligent Transportation Engineering Kumru Murat; Debada Ezequiel; Makarem Laleh; Gillet Denis IRN - ISBN 978-1-5090-6272-0 ; ISBN 1-5090-6272-6 PG - 178 - 183, discloses a method for scheduling autonomous scooters.

### Summary

The embodiments of the present disclosure provide a scooter scheduling method and apparatus, a storage medium and an electronic apparatus, which can at least solve the problem that a scooter cannot be effectively scheduled because a lot of manpower and material resources need to be consumed to schedule the scooter in the related art.

According to the invention, there is provided a scooter scheduling method according to claim 1, a scooter scheduling apparatus according to claim 9, a storage medium according to claim 11 and an electronic apparatus according to claim 12.

With the present disclosure, the scooter having the automatic driving ability is automatically scheduled by using the scheduling apparatus, and the scooter does not need to be carried manually, so that the manpower and the material resources are effectively saved. Therefore, the problem that the scooter cannot be scheduled effectively because a lot of manpower and material resources need to be consumed to schedule the scooter in the related art may be solved.

### Brief Description of the Drawings

The accompanying drawings are described here to provide a further understanding of the present disclosure. The schematic embodiments and description of the present disclosure are adopted to explain the present disclosure, and do not form improper limits to the present disclosure. In the drawings:
Fig. 1 illustrates a flowchart of a scooter scheduling method according to an embodiment of the present disclosure; and
Fig. 2 illustrates a structural block diagram of a scooter scheduling apparatus according to an embodiment of the present disclosure.

### Detailed Description of the Embodiments

The present disclosure is described below with reference to the drawings and embodiments in detail. It should be noted that the embodiments of the present application and the characteristics of the embodiments may be combined with each other in a case where there is no conflict.

It is to be noted that, terminologies such as "first" and "second" in the specification, claims and accompanying drawings of the present disclosure are only used to distinguish similar objects, rather than to describe a special order or a precedence order.

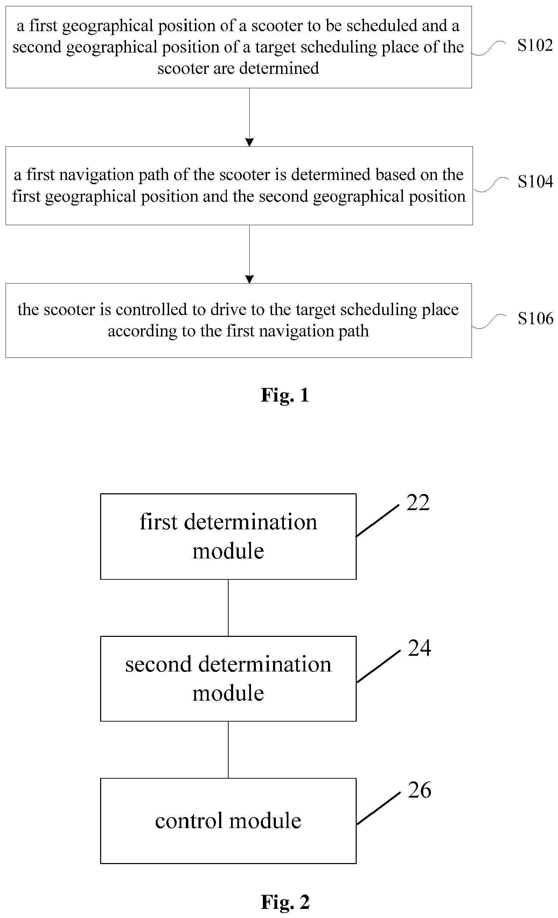

The embodiments provide a scooter scheduling method. FIG.1 illustrates a flowchart of a scooter scheduling method according to an embodiment of the present disclosure. As illustrated in Fig.1, the process includes the following steps:
At Step S102, a first geographical position of a scooter to be scheduled and a second geographical position of a target scheduling place of the scooter are determined.
At Step S104, a first navigation path of the scooter is determined based on the first geographical position and the second geographical position.
At Step S106, the scooter is controlled to drive to the target scheduling place according to the first navigation path.

According to the claimed invention, the scooter is a scooter having an automatic driving ability. An execution main body in the above embodiment is a control device, and the control device may be arranged at a remote end. With the claimed invention, the scooter having the automatic driving ability is automatically scheduled by using a scheduling apparatus, and the scooter does not need to be carried manually, so that the manpower and the material resources are effectively saved. Therefore, the problem that the scooter cannot be scheduled effectively because a lot of manpower and material resources need to be consumed to schedule the scooter in the related art may be solved.

In an optional embodiment, when there are at least two scooters, the step that the at least two scooters are controlled to drive to the target scheduling place according to the first navigation path includes the following steps: a scheduling mode corresponding to a road condition is determined, wherein the road condition is a road condition of a road through which the first navigation path passes; and according to the scheduling mode, the at least two scooters are controlled to drive to the target scheduling place according to the first navigation path. In the present disclosure, there may be only one scooter to be scheduled and may also be a plurality of scooters to be scheduled; and when the plurality of scooters are scheduled, there is a need to consider a specific scheduling mode. In this embodiment, a specific road condition of an area through which the navigation path passes may be determined first and then a scheduling mode corresponding to the specific road condition is determined. In this way, the purpose of scheduling the at least two scooters according to the scheduling mode corresponding to the current road condition may be implemented.

In an optional embodiment, the step that the scheduling mode corresponding to the road condition is determined includes at least one of the followings: when the road condition is a condition in which a crowd density is greater than a first predetermined value and/or a vehicle density is greater than a second predetermined value, it is determined that the scheduling mode corresponding to the road condition is a single vehicle scheduling mode, wherein the single vehicle scheduling mode is a mode of sequentially scheduling the at least two scooters; and when the road condition is a condition in which the crowd density is not greater than the first predetermined value and the vehicle density is not greater than the second predetermined value, it is determined that the scheduling mode corresponding to the road condition is a batch scheduling mode, wherein the batch scheduling mode is a mode of simultaneously scheduling the at least two scooters. In this embodiment, when the crowd density is determined, it may be appropriate that a average crowd density and/or a average vehicle density of the road through which the first navigation road passes is determined as the crowd density and/or the vehicle density; and it may further be appropriate that a crowd density and/or the vehicle density on each road section included in the road through which the first navigation path passes are determined respectively, and the highest crowd density and/or the highest vehicle density are determined as the crowd density and/or the vehicle density. Besides, in actual application, it may further be appropriate that the scheduling mode is adjusted in road sections according to the crowd density and/or vehicle density on each road section. In this embodiment, when the scheduling model is determined, the width of the road may further be considered comprehensively. For example, when the road is wide and the crowd density and the vehicle density are low, the batch scheduling mode is adopted. Wherein the single vehicle scheduling mode is a mode in which the at least two scooters are scheduled sequentially one by one; and moreover, the scheduling interval between the at least two scooters may be flexibly adjusted (adjusted according to the road condition), and may be, for example, set as 5 s or 10 s.

In the above embodiment, when there is a need to schedule a plurality of scooters to be scheduled in the single vehicle scheduling mode, a specific scheduling sequence, i.e., a departing sequence of each scooter, may be determined according to a position of each scooter in a scooter cluster (herein, the scooter cluster consists of a plurality of or all scooters in a area to be scheduled, or consists of a plurality of scooters in a predetermined area around a position of each scooter). Therefore, the departing sequence of the plurality of scooters is not random, and upon the determination of the plurality of scooters to be scheduled, the plurality of scooters may be indicated to photograph by using own cameras and to return the photographed multimedia files. According to each multimedia file (an image of each scooter included in the multimedia file may be determined by using an image identification technology), the position of each scooter in the scooter cluster may be determined and thus the scheduling sequence of each scooter is determined. For example, a scooter at the outermost edge of the scooter cluster may be controlled to depart first and then a scooter at a next outermost edge may be controlled to depart; and so on, the problem of congestion due to the fact that a scooter inside the scooter cluster departs first is prevented.

In addition, in a case where a scooter is blocked inside the scooter cluster and the other scooter blocking the movement of the scooter is not a scooter to be scheduled, it is considerable to re-select a scooter to be scheduled, i.e., the scooter that is blocked and cannot be moved is no longer scheduled, and the other scooter not in the to-be-scheduled state around is selected; Herein, the re-selection operation may be actively triggered by the scooter that is blocked and cannot be moved (i.e., the scooter triggers the operation by sending a request to the control device), and the re-selection operation may also be actively triggered by the control device, e.g., when the control device detects that the scooter to be scheduled is not moved within predetermined time or the movement distance of the scooter to be scheduled within predetermined time is smaller than a predetermined value, the operation of re-selecting the scooter to be scheduled may be triggered.

In an optional embodiment, when the scheduling mode corresponding to the road condition is determined to be the batch scheduling mode, the step that according to the scheduling mode, the at least two scooters are controlled to drive to the target scheduling place according to the first navigation path includes the following steps: a sliding queue is determined according to the first geographical positions of the at least two scooters; and the at least two scooters are controlled to drive to the target scheduling place according to the sliding queue and the first navigation path. In this embodiment, before the step that a sliding queue is determined according to the first geographical positions of the at least two scooters, identification information of each scooter may be determined first, the at least two scooters are arranged in a queue according to the identification information of each scooter, and the arranged queue information is sent to each scooter, so that each scooter knows a specific position in the queue (each scooter may acquire identification information of all scooters in a certain area in advance, and then determines own adjacent other scooters according to the identification information of the scooters in the queue information). Additionally, it is further to be noted that the above sliding queue may be adjusted in real time according to the specific road condition. For example, when a plurality of scooters are slid by adopting a two-column concurrent manner and when the plurality of scooters enter an area with a large crowd density and/or a large vehicle density, the queue may be adjusted to slide in a mode of one longitudinal queue, and the distance between each scooter may be set in advance. In actual application, it is preferable to control the plurality of scooters to slide by adopting the mode of one longitudinal queue; and a certain distance is spaced between the plurality of scooters, so that the influence on the road is prevented.

According to the claimed invention, in a process that the scooter is controlled to drive to the target scheduling place according to the first navigation path, the method further includes the following steps: at least one of the following conditions is detected occurred: a distance that a driving path of the scooter is deviated from the first navigation path is greater than a third predetermined value, a duration that the scooter has stopped sliding is greater than a fourth predetermined value, the scooter does not drive to the target scheduling place within a specified time range; and the scooter is indicated to photograph with a camera and upload a photographed multimedia file. In this embodiment, some exceptional conditions, i.e., at least one of the above-mentioned several conditions, may be occurred in the process that the scooter drives automatically according to the first navigation path. When it is determined that at least one of the above conditions is occurred, reasons for a specific exception is determined first according to the multimedia file photographed by the camera on the scooter, and then suitable measures including but not limited to manual intervention are taken; and when the manual intervention is adopted, position information of the scooter occurring the exception may be sent to a corresponding operation and maintenance staff, and upon the received position information, the operation and maintenance staff may go to the site to execute the corresponding processing measure.

According to the claimed invention, after the step that the scooter is indicated to photograph with the camera and upload the photographed multimedia file, the method further includes the following steps: a path adjustment instruction is received; a second navigation path of the scooter is determined based on the path adjustment instruction; and the scooter is controlled to drive to the target scheduling place according to the second navigation path. In this embodiment, upon the reception of the multimedia file, the reasons for the driving exception of the scooter may be analyzed, and upon the determination that the scooter cannot slide according to the original navigation path, i.e., the first navigation path (for example, temporary road closure, or a serious traffic jam occurs), it is considerable to re-plan a navigation path for the scooter. Certainly, the new planned navigation path is started from the current position of the scooter and is ended at the target scheduling place. The above adjustment instruction may be an instruction input by an operator, and may also be an instruction input by a processor. The processor may analyze, according to the image in the multimedia file, whether the scooter may drive continuously according to the original navigation path or not, and send the path adjustment instruction in a case whereit is determined that the scooter cannot drive continuously according to the original navigation path.

In an optional embodiment, before the step that the first geographical position of the scooter to be scheduled is determined, the method further includes at least one of the followings: the scooter is determined according to an input selection instruction; the scooter is determined according to a scooter density in a scooter parking area; and a scheduling area is determined according to a distance from a scooter parking area to the target scheduling place, and the scooter in the scheduling area is determined. In this embodiment, the input selection instruction may be an instruction input by the operator, and certainly may also be a selection instruction triggered by other devices after the scooter is determined according to a predetermined rule. When the scooter is determined according to the scooter density in the scooter parking area, the larger the scooter density, the greater the number of determined scooters; and the smaller the scooter density, the smaller the number of determined scooters. When the scheduling area is determined according to the distance from the scooter parking area to the target scheduling place, an area nearest to the target scheduling place may be preferably considered as the scheduling area. Certainly, in such a case, the number of idle scooters in each area may further be considered comprehensively, and when the number of scooters in the area nearest to the target scheduling place is smaller than a certain threshold, an area at a slightly far distance may be considered, i.e., whether the number of scooters in the area nearest to the target scheduling place in rest areas is smaller than the certain threshold or not is judged, and in a case where the number is not smaller than the certain threshold, the area nearest to the target scheduling place in the rest areas is taken as the scheduling area.

In an optional embodiment, the step that the first geographical position of the scooter to be scheduled is determined includes the following step: the first geographical position of the scooter is determined according to data reported by a Global Position System (GPS) mounted on the scooter.

In an optional embodiment, the step that the first geographical position of the scooter is determined according to the data reported by the GPS mounted on the scooter includes the following steps: the first geographical position of the scooter is determined according to the data periodically reported by the GPS mounted on the scooter; or, a position obtaining request is sent to the scooter, position information of the scooter returned by the GPS mounted on the scooter upon the trigger of the position obtaining request is received, and the first geographical position of the scooter is determined based on the position information. In this embodiment, the GPS may report the detected position information periodically according to a reporting cycle set in advance, or reports the detected position information only upon the reception of a request message, wherein the reporting cycle may be fixed and may also be adjustable.

In an optional embodiment, after the step that the first geographical position of the scooter is determined according to the data periodically reported by the GPS mounted on the scooter, the method further includes the following steps: the scooter is indicated to photograph with a camera and upload a photographed multimedia file; and the first geographical position is corrected according to the multimedia file. There is no necessary precedence sequence between the step in the current embodiment and the step of acquiring the detected position information reported by the GPS, and it is feasible no matter which operation is executed first or both are executed simultaneously. Since the detected position information reported by the GPS may have a certain deviation, the specific position may be determined by using the multimedia file photographed with the camera and then the detected position information reported by the GPS may be corrected to obtain more accurate position information.

The above embodiments are mainly described from the control device side, a series of control operations are executed at the control device side and the scooter may drive automatically according to the instruction from the control device. Hereinafter, the actions at the scooter side will be described:
The following operations may be executed by the scooter: a driving instruction is received; and in response to the driving instruction, the scooter is controlled to automatically drive to a target scheduling place according to a navigation path at least in one of the following manners: a gravity center of the scooter is lowered; and in a case where an obstacle is detected, the scooter is controlled to avoid the obstacle or wait for predetermined time.

In this embodiment of the present disclosure, before the scooter is controlled to automatically drive to a target charging device according to the navigation path at least in one of the following manners: the gravity center of the scooter is lowered; and before the step that in a case where an obstacle is detected, the scooter is controlled to avoid the obstacle or wait for predetermined time, the method further include the following step:
Whether the obstacle is present or not within a predetermined range of the scooter is detected according to a detection component on the scooter.

In this embodiment of the present disclosure, the step that a gravity center of the scooter is lowered includes at least one of the followings: a support rod of the scooter is controlled to automatically fold to lower the gravity center of the scooter; and the support rod of the scooter is controlled to automatically lower the height to lower the gravity center of the scooter.

In this embodiment of the present disclosure, the detection component at least includes one of the followings: a camera, a radar assembly and a sensor.

In this embodiment of the present disclosure, before the step that the scooter is controlled to automatically drive to the target scheduling place according to the navigation path at least in one of the following manners: the gravity center of the scooter is lowered; and in a case where an obstacle is detected, the scooter is controlled to avoid the obstacle or wait for predetermined time, the method further include the following step: an auxiliary wheel is mounted on the scooter to prevent the turnover of the scooter.

Through the above description of the embodiment, those skilled in the art may clearly understand that the method according to the above embodiment may be implemented through software in connection with a necessary general hardware platform, or may be implemented by hardware. However, in many cases, the former is a better implementation. Based on this understanding, the technical solution of the embodiment of the present disclosure in essence or the part contributing to the prior art may be embodied in the form of a software product. The computer software product is stored in a storage medium (such as a ROM/RAM, a magnetic disc, an optical disc), including several instructions which may cause a terminal device (such as a mobile phone, a computer, a server, or a network device and the like) to execute the method according to the embodiments of the present disclosure.

The embodiments further provide a scooter scheduling apparatus (the apparatus may be the control device, and the apparatus may further be a part of the control device).The apparatus is configured to implement the above embodiments and preferred implementation manners and the parts that have been described will no longer be repeated. As used herein, the term "module" is a combination of software and/or hardware capable of implementing a predetermined function. Although the apparatus described in the following embodiment is preferably implemented by software, it may also be conceivable to implement by hardware or a combination of the software and the hardware.

Fig. 2 illustrates a structural block diagram of a scooter scheduling apparatus according to an embodiment of the present disclosure. As illustrated in Fig. 2, the scooter scheduling apparatus includes a first determination module 22, a second determination module 24 and a control module 26.

The first determination module 22 is configured to determine a first geographical position of a scooter to be scheduled and a second geographical position of a target scheduling place of the scooter; the second determination module 24 is configured to determine a first navigation path of the scooter based on the first geographical position and the second geographical position; and the control module 26 is configured to control the scooter to drive to the target scheduling place according to the first navigation path, wherein the scooter has an automatic driving ability.

In an optional embodiment, the control module 26 includes a determination unit and a control unit, the determination unit is configured to determine, when when are at least two scooters, a scheduling mode corresponding to a road condition, wherein the road condition is a road condition of a road through which the first navigation path passes; the control unit is configured to control, according to the scheduling mode, the at least two scooters to drive to the target scheduling place according to the first navigation path.

In an optional embodiment, the determination unit is configured to determine the scheduling mode corresponding to the road condition by executing at least one of the following operations: when the road condition is a condition in which a crowd density is greater than a first predetermined value and/or a vehicle density is greater than a second predetermined value, it is determined that the scheduling mode corresponding to the road condition is a single vehicle scheduling mode, wherein the single vehicle scheduling mode is a mode of sequentially scheduling the at least two scooters; when the road condition is a condition in which the crowd density is not greater than the first predetermined value and the vehicle density is not greater than the second predetermined value, it is determined that the scheduling mode corresponding to the road condition is a batch scheduling mode, wherein the batch scheduling mode is a mode of simultaneously scheduling at least two scooters.

In an optional embodiment, when it is determined that the scheduling mode corresponding to the road condition is the batch scheduling mode, the control unit is configured to determine a sliding queue according to geographical positions of at least two scooters, and control the at least two scooters to drive to the target scheduling place according to the sliding queue and the first navigation path.

According to the claimed invention, the apparatus is further configured to execute the following operations in a process that the scooter is controlled to drive to the target scheduling place according to the first navigation path: detect occurrence of at least one of the following conditions: a distance that a driving path of the scooter is deviated from the first navigation path is greater than a third predetermined value, a duration that the scooter has stopped sliding is greater than a fourth predetermined value, the scooter does not drive to the target scheduling place within a specified time range; and indicate the scooter to photograph with a camera and upload a photographed multimedia file.

According to the claimed invention, the apparatus is further configured to receive, after indicating the scooter to photograph with the camera and upload the photographed multimedia file, a path adjustment instruction; determine a second navigation path of the scooter based on the path adjustment instruction; and control the scooter to drive to the target scheduling place according to the second navigation path.

In an optional embodiment, the apparatus is further configured to execute at least one of the following operations before determining the first geographical position of the scooter to be scheduled: determine the scooter according to an input selection instruction; determine the scooter according to a scooter density in a scooter parking area; and determine a scheduling area according to a distance from a scooter parking area to the target scheduling place, and determine the scooter in the scheduling area.

In an optional embodiment, the first determination module 22 may determine the first geographical position of the scooter via the following manner: determine the first geographical position of the scooter according to data reported by a Global Position System (GPS) mounted on the scooter.

In an optional embodiment, the first determination module 22 may determine the first geographical position of the scooter according to data reported by the GPS mounted on the scooter via the following manner: determine the first geographical position of the scooter according to the data periodically reported by the GPS mounted on the scooter; or, send a position obtaining request to the scooter, receive position information of the scooter returned by the GPS mounted on the scooter upon trigger of the position obtaining request, and determine the first geographical position of the scooter based on the position information.

In an optional embodiment, the apparatus is further configured to indicate, after determining the first geographical position of the scooter according to the data periodically reported by the GPS mounted on the scooter, the scooter to photograph with a camera and upload a photographed multimedia file; and correct the first geographical position according to the multimedia file.

It is to be noted that the above modules may be implemented via software or hardware, and for the latter, it may be implemented but not limited to the following manners: the above modules are located in a same processor; or the above modules are respectively located in different processors in any combined form.

The embodiments of the present disclosure further provide a storage medium; the storage medium stores a computer program, and the computer program is configured to execute the steps of the above-mentioned any method embodiment in running.

Optionally, in this embodiment, the above storage medium may include but not limited to: various media capable of storing the computer program such as a USB flash disk, a Read-Only Memory (abbreviated as ROM) , a Random Access Memory (abbreviated as RAM), a mobile hard disk, a magnetic disk or an optical disk.

The embodiment of the present disclosure further provide an electronic apparatus, which includes a memory and a processor; the memory stores a computer program; and the processor is configured to run the computer program to execute the steps of the above-mentioned any method embodiment.

Optionally, the electronic apparatus may further include a transmission device and an input-output device, wherein the transmission device is connected with the processor, and the input-output device is connected with the processor.

Optionally, the specific examples in this embodiment may be referred to the examples described in the above embodiments and optional implementation manners, and will not be repeated here in this embodiment.

Obviously, those skilled in the art should know that each module or each step of the present disclosure may be implemented by a universal computing device, and the modules or steps may be concentrated on a single computing device or distributed on a network formed by a plurality of computing devices, and may optionally be implemented by program codes executable for the computing devices, so that the modules or steps may be stored in a storage device for execution with the computing devices, the shown or described steps may be executed in sequences different from those described here in some circumstances, or may form each integrated circuit module respectively, or multiple modules or steps therein may form a single integrated circuit module for implementation. Therefore, the present disclosure is not limited to any specific hardware and software combination.

The above is only the optional embodiment of the present disclosure and not intended to limit the scope of protection of the present disclosure. For those skilled in the art, the present disclosure may have various modifications and variations. Any modifications, equivalent replacements, improvements and the like made within the principle of the present disclosure shall fall within the scope of protection of the appended claims.

## Claims

1. A scooter scheduling method, which is performed by a control device, comprising:
determining a first geographical position of a scooter to be scheduled and a second geographical position of a target scheduling place of the scooter;
determining a first navigation path of the scooter based on the first geographical position and the second geographical position; and
controlling the scooter to drive to the target scheduling place according to the first navigation path,
wherein the scooter has an automatic driving ability;
wherein in a process of controlling the scooter to drive to the target scheduling place according to the first navigation path, the method further comprises: detecting occurrence of at least one of the following conditions: a distance that a driving path of the scooter is deviated from the first navigation path is greater than a third predetermined value, a duration that the scooter has stopped sliding is greater than a fourth predetermined value, the scooter does not drive to the target scheduling place within a specified time range; and indicating the scooter to photograph images within the field of view of a camera with the camera and upload a photographed multimedia file to determine the at least one of the above conditions;
wherein after indicating the scooter to photograph images within the field of view of a camera with the camera and upload a photographed multimedia file to determine the at least one of the above conditions,
the method further comprises: receiving a path adjustment instruction, wherein the path adjustment instruction is determined according to the photographed multimedia file; determining a second navigation path of the scooter based on the path adjustment instruction; and controlling the scooter to drive to the target scheduling place according to the second navigation path.

2. The method as claimed in claim 1, wherein when there are at least two scooters, controlling the at least two scooters to drive to the target scheduling place according to the first navigation path comprises:
determining a scheduling mode corresponding to a road condition, wherein the road condition is a road condition of a road through which the first navigation path passes; and
controlling, according to the scheduling mode, the at least two scooters to drive to the target scheduling place according to the first navigation path.

3. The method as claimed in claim 2, wherein determining the scheduling mode corresponding to the road condition comprises at least one of the followings:
when the road condition is a condition in which a crowd density is greater than a first predetermined value and/or a vehicle density is greater than a second predetermined value, determining that the scheduling mode corresponding to the road condition is the single vehicle scheduling mode, wherein the single vehicle scheduling mode is a mode of sequentially scheduling the at least two scooters;
when the road condition is a condition in which the crowd density is not greater than the first predetermined value and the vehicle density is not greater than the second predetermined value, determining that the scheduling mode corresponding to the road condition is the batch scheduling mode, wherein the batch scheduling mode is a mode of simultaneously scheduling the at least two scooters.

4. The method as claimed in claim 3, wherein when the scheduling mode corresponding to the road condition is determined to be the batch scheduling mode, controlling, according to the scheduling mode, the at least two scooters to drive to the target scheduling place according to the first navigation path comprises:
determining, according to the first geographical positions of the at least two scooters, a sliding queue; and
controlling, according to the sliding queue and the first navigation path, the at least two scooters to drive to the target scheduling place.

5. The method as claimed in claim 1, wherein before determining the first geographical position of the scooter to be scheduled, the method further comprises at least one of the followings:
determining the scooter according to an input selection instruction;
determining the scooter according to a scooter density in a scooter parking area;
determining a scheduling area according to a distance from a scooter parking area to the target scheduling place, and determining the scooter in the scheduling area.

6. The method as claimed in claim 1, wherein the determining the first geographical position of the scooter to be scheduled comprises:
determining the first geographical position of the scooter according to data reported by a Global Position System, GPS, mounted on the scooter.

7. The method as claimed in claim 6, wherein the determining the first geographical position of the scooter according to the data reported by the GPS mounted on the scooter comprises:
determining the first geographical position of the scooter according to the data periodically reported by the GPS mounted on the scooter; or,
sending a position obtaining request to the scooter, receiving position information of the scooter returned by the GPS mounted on the scooter upon trigger of the position obtaining request, and determining the first geographical position of the scooter based on the position information.

8. The method as claimed in claim 7, wherein after determining the first geographical position of the scooter according to the data periodically reported by the GPS mounted on the scooter, the method further comprises:
indicating the scooter to photograph images within the field of view of a camera with the camera and upload a photographed multimedia file and
correcting the first geographical position according to the multimedia file.

9. A scooter scheduling apparatus, comprising:
a first determination module, configured to determine a first geographical position of a scooter to be scheduled and a second geographical position of a target scheduling place of the scooter;
a second determination module, configured to determine a first navigation path of the scooter based on the first geographical position and the second geographical position; and
a control module, configured to control the scooter to drive to the target scheduling place according to the first navigation path,
wherein the scooter has an automatic driving ability;
wherein the apparatus is further configured to execute the following operations in a process that the scooter is controlled to drive to the target scheduling place according to the first navigation path: detect occurrence of at least one of the following conditions: a distance that a driving path of the scooter is deviated from the first navigation path is greater than a third predetermined value, a duration that the scooter has stopped sliding is greater than a fourth predetermined value, the scooter does not drive to the target scheduling place within a specified time range; and indicate the scooter to photograph images within the field of view of a camera with the camera and upload a photographed multimedia file to determine the at least one of the above conditions;
wherein the apparatus is further configured to receive, after indicate the scooter to photograph images within the field of view of a camera with the camera and upload a photographed multimedia file to determine the at least one of the above conditions, a path adjustment instruction, wherein the path adjustment instruction is determined according to the photographed multimedia file; determine a second navigation path of the scooter based on the path adjustment instruction; and control the scooter to drive to the target scheduling place according to the second navigation path .

10. The apparatus as claimed in claim 9, wherein the determination unit is configured to determine the scheduling mode corresponding to the road condition by executing at least one of the followings:
when the road condition is a condition in which a crowd density is greater than a first predetermined value and/or a vehicle density is greater than a second predetermined value, determining that the scheduling mode corresponding to the road condition is the single vehicle scheduling mode, wherein the single vehicle scheduling mode is a mode of sequentially scheduling the at least two scooters;
when the road condition is a condition in which the crowd density is not greater than the first predetermined value and the vehicle density is not greater than the second predetermined value, determining that the scheduling mode corresponding to the road condition is the batch scheduling mode, wherein the batch scheduling mode is a mode of simultaneously scheduling the at least two scooters.

11. A storage medium, wherein the storage medium stores a computer program; and the computer program is configured to execute any one of the methods as claimed in claims 1-8 in running.

12. An electronic apparatus, comprising the storage medium of claim 11, wherein the electronic apparatus further comprises a a processor; and the processor is configured to run the computer program to execute any one of the methods as claimed in claims 1-8 in running.

## Patentansprüche

1. Rollerplanungsverfahren, das von einem Steuergerät durchgeführt wird, umfassend:
Bestimmen einer ersten geographischen Position eines zu planenden Rollers und einer zweiten geographischen Position eines Zielplanungsorts des Rollers;
Bestimmen eines ersten Navigationspfads des Rollers basierend auf der ersten geographischen Position und der zweiten geographischen Position; und
Steuern des Rollers, um gemäß dem ersten Navigationspfad zu dem Zielplanungsort zu fahren,
wobei der Roller eine automatische Fahrfähigkeit aufweist;
wobei in einem Prozess der Steuerung des Rollers, um zu dem Zielplanungsort gemäß dem ersten Navigationspfad zu fahren, das Verfahren ferner Folgendes umfasst: Erkennen des Auftretens von mindestens einer der folgenden Bedingungen: eine Entfernung, in der ein Fahrpfad des Rollers von dem ersten Navigationspfad abweicht, ist größer als ein dritter vorbestimmter Wert, eine Dauer, in der der Roller aufgehört hat, zu gleiten, ist größer als ein vierter vorbestimmter Wert, der Roller fährt nicht zu dem Zielplanungsort innerhalb eines spezifizierten Zeitbereichs; und Anweisen des Rollers, Bilder innerhalb des Sichtfelds einer Kamera mit der Kamera zu fotografieren und eine fotografierte Multimediadatei hochzuladen, um die mindestens eine der oben genannten Bedingungen zu bestimmen;
wobei nach dem Anweisen des Rollers, Bilder innerhalb des Sichtfelds einer Kamera mit der Kamera zu fotografieren und eine fotografierte Multimediadatei hochzuladen, um die mindestens eine der oben genannten Bedingungen zu bestimmen, das Verfahren ferner Folgendes umfasst: Empfangen einer Pfadanpassungsanweisung, wobei die Pfadanpassungsanweisung gemäß der fotografierten Multimediadatei bestimmt wird; Bestimmen eines zweiten Navigationspfads des Rollers basierend auf der Pfadanpassungsanweisung; und Steuern des Rollers, um zu dem Zielplanungsort gemäß dem zweiten Navigationspfad zu fahren.

2. Verfahren nach Anspruch 1, wobei, wenn mindestens zwei Roller vorhanden sind, das Steuern der mindestens zwei Roller, um zu dem Zielplanungsort gemäß dem ersten Navigationspfad zu fahren, Folgendes umfasst:
Bestimmen eines Planungsmodus entsprechend einem Straßenzustand, wobei der Straßenzustand ein Straßenzustand einer Straße ist, durch die der erste Navigationspfad hindurchführt; und
Steuern der mindestens zwei Roller gemäß dem Planungsmodus, um zu dem Zielplanungsort gemäß dem ersten Navigationspfad zu fahren.

3. Verfahren nach Anspruch 2, wobei das Bestimmen des Planungsmodus, der dem Straßenzustand entspricht, mindestens eines von Folgendem umfasst:
wenn der Straßenzustand ein Zustand ist, in dem eine Menschendichte größer ist als ein erster vorbestimmter Wert und/oder eine Fahrzeugdichte größer ist als ein zweiter vorbestimmter Wert, Bestimmen, dass der Planungsmodus, der dem Straßenzustand entspricht, der Einzelfahrzeug-Planungsmodus ist, wobei der Einzelfahrzeug-Planungsmodus ein Modus des aufeinanderfolgenden Planens der mindestens zwei Roller ist;
wenn der Straßenzustand ein Zustand ist, in dem die Menschendichte nicht größer ist als der erste vorbestimmte Wert und die Fahrzeugdichte nicht größer ist als der zweite vorbestimmte Wert, Bestimmen, dass der Planungsmodus, der dem Straßenzustand entspricht, der Batch-Planungsmodus ist, wobei der Batch-Planungsmodus ein Modus des gleichzeitigen Planens der mindestens zwei Roller ist.

4. Verfahren nach Anspruch 3, wobei, wenn der Planungsmodus, der dem Straßenzustand entspricht, als der Batch-Planungsmodus bestimmt wird, Steuern der mindestens zwei Roller gemäß dem Planungsmodus, um zu dem Zielplanungsort gemäß dem ersten Navigationspfad zu fahren, Folgendes umfasst:
Bestimmen einer Gleitwarteschlange gemäß den ersten geographischen Positionen der mindestens zwei Roller; und
Steuern der mindestens zwei Roller gemäß der Gleitwarteschlange und dem ersten Navigationspfad, um zu dem Zielplanungsort zu fahren.

5. Verfahren nach Anspruch 1, wobei das Verfahren vor dem Bestimmen der ersten geographischen Position des zu planenden Rollers ferner mindestens eines von Folgendem umfasst:
Bestimmen des Rollers gemäß einer Eingabeauswahlanweisung;
Bestimmen des Rollers gemäß einer Rollerdichte in einem Rollerparkbereich;
Bestimmen eines Planungsbereichs gemäß einer Entfernung von einem Rollerparkbereich zu dem Zielplanungsort, und Bestimmen des Rollers in dem Planungsbereich.

6. Verfahren nach Anspruch 1, wobei das Bestimmen der ersten geographischen Position des zu planenden Rollers Folgendes umfasst:
Bestimmen der ersten geographischen Position des Rollers gemäß Daten, die von einem globalen Positionierungssystem, GPS, das auf dem Roller montiert ist, gemeldet werden.

7. Verfahren nach Anspruch 6, wobei das Bestimmen der ersten geographischen Position des Rollers gemäß den Daten, die von dem GPS, das auf dem Roller montiert ist, gemeldet werden, Folgendes umfasst:
Bestimmen der ersten geographischen Position des Rollers gemäß den Daten, die periodisch von dem GPS, das auf dem Roller montiert ist, gemeldet werden; oder,
Senden einer Positionserlangungsanfrage an den Roller, Empfangen von Positionsinformationen des Rollers, die von dem GPS, das auf dem Roller montiert ist, bei Auslösung der Positionserlangungsanfrage zurückgegeben werden, und Bestimmen der ersten geographischen Position des Rollers basierend auf den Positionsinformationen.

8. Verfahren nach Anspruch 7, wobei das Verfahren nach dem Bestimmen der ersten geographischen Position des Rollers gemäß den Daten, die von dem GPS, das auf dem Roller montiert ist, periodisch gemeldet werden, Folgendes umfasst:
Anweisen des Rollers, Bilder innerhalb des Sichtfelds einer Kamera mit der Kamera zu fotografieren und eine fotografierte Multimediadatei hochzuladen und Korrigieren der ersten geographischen Position gemäß der Multimediadatei.

9. Rollerplanungsvorrichtung, Folgendes umfassend:
ein erstes Bestimmungsmodul, das so konfiguriert ist, dass es eine erste geographische Position eines zu planenden Rollers und eine zweite geographische Position eines Zielplanungsorts des Rollers bestimmt;
ein zweites Bestimmungsmodul, das so konfiguriert ist, dass es einen ersten Navigationspfad des Rollers basierend auf der ersten geographischen Position und der zweiten geographischen Position bestimmt; und
ein Steuermodul, das so konfiguriert ist, dass es den Roller so steuert, dass er gemäß dem ersten Navigationspfad zu dem Zielplanungsort fährt,
wobei der Roller eine automatische Fahrfähigkeit aufweist;
wobei die Vorrichtung ferner so konfiguriert ist, dass sie die folgenden Vorgänge in einem Prozess ausführt, in dem der Roller so gesteuert wird, dass er gemäß dem ersten Navigationspfad zu dem Zielplanungsort fährt: Erkennen des Auftretens von mindestens einer der folgenden Bedingungen: eine Entfernung, in der ein Fahrpfad des Rollers von dem ersten Navigationspfad abweicht, ist größer als ein dritter vorbestimmter Wert, eine Dauer, in der der Roller aufgehört hat, zu gleiten, ist größer als ein vierter vorbestimmter Wert, der Roller fährt nicht zu dem Zielplanungsort innerhalb eines spezifizierten Zeitbereichs; und den Roller anweist, Bilder innerhalb des Sichtfelds einer Kamera mit der Kamera zu fotografieren und eine fotografierte Multimediadatei hochzuladen, um die mindestens eine der oben genannten Bedingungen zu bestimmen;
wobei die Vorrichtung ferner so konfiguriert ist, dass sie nach dem Anweisen des Rollers Bilder innerhalb des Sichtfelds einer Kamera mit der Kamera zu fotografieren und eine fotografierte Multimediadatei hochzuladen, um die mindestens eine der obigen Bedingungen zu bestimmen, eine Pfadanpassungsanweisung empfängt, wobei die Pfadanpassungsanweisung gemäß der fotografierten Multimediadatei bestimmt wird; einen zweiten Navigationspfad des Rollers basierend auf der Pfadanpassungsanweisung bestimmt; und den Roller steuert, um zu dem Zielplanungsort gemäß dem zweiten Navigationspfad zu fahren.

10. Vorrichtung nach Anspruch 9, wobei die Bestimmungseinheit so konfiguriert ist, dass sie den Planungsmodus bestimmt, der dem Straßenzustand entspricht, indem sie mindestens eines von Folgendem ausführt:
wenn der Straßenzustand ein Zustand ist, in dem eine Menschendichte größer ist als ein erster vorbestimmter Wert und/oder eine Fahrzeugdichte größer ist als ein zweiter vorbestimmter Wert, Bestimmen, dass der Planungsmodus, der dem Straßenzustand entspricht, der Einzelfahrzeug-Planungsmodus ist, wobei der Einzelfahrzeug-Planungsmodus ein Modus des aufeinanderfolgenden Planens der mindestens zwei Roller ist;
wenn der Straßenzustand ein Zustand ist, in dem die Menschendichte nicht größer ist als der erste vorbestimmte Wert und die Fahrzeugdichte nicht größer ist als der zweite vorbestimmte Wert, Bestimmen, dass der Planungsmodus, der dem Straßenzustand entspricht, der Batch-Planungsmodus ist, wobei der Batch-Planungsmodus ein Modus des gleichzeitigen Planens der mindestens zwei Roller ist.

11. Speichermedium, wobei das Speichermedium ein Computerprogramm speichert; und das Computerprogramm so konfiguriert ist, dass es irgendeines der Verfahren nach den Ansprüchen 1-8 im laufenden Betrieb ausführt.

12. Elektronische Vorrichtung, umfassend das Speichermedium nach Anspruch 11, wobei die elektronische Vorrichtung ferner einen Prozessor umfasst; und der Prozessor so konfiguriert ist, dass er das Computerprogramm betreibt, um irgendeines der Verfahren nach den Ansprüchen 1-8 im laufenden Betrieb auszuführen.

## Revendications

1. Procédé de planification de scooter, qui est exécuté par un dispositif de commande, comprenant :
déterminer une première position géographique d'un scooter à planifier et une seconde position géographique d'un lieu de planification cible du scooter ;
déterminer un premier itinéraire de navigation du scooter en fonction de la première position géographique et de la seconde position géographique ; et
amener le scooter à se rendre au lieu de planification cible en fonction du premier chemin de navigation,
dans lequel le scooter a une capacité de conduite automatique ;
dans lequel, dans un processus de commande consistant à amener le à se rendre au lieu de planification cible selon le premier chemin de navigation, le procédé comprend en outre : la détection de l'apparition d'au moins l'une des conditions suivantes : une distance à laquelle un chemin de conduite du scooter s'écarte du premier chemin de navigation est supérieure à une troisième valeur prédéterminée, une durée pendant laquelle le scooter a arrêté de glisser est supérieure à une quatrième valeur prédéterminée, le scooter ne se rend pas au lieu de planification cible dans une plage de temps spécifiée ; et l'indication au scooter de photographier des images dans le champ de vision d'une caméra avec la caméra et de télécharger un fichier multimédia photographié pour déterminer l'au moins une des conditions ci-dessus ;
dans lequel après avoir indiqué au scooter de photographier des images dans le champ de vision d'une caméra avec la caméra et de télécharger un fichier multimédia photographié pour déterminer l'au moins une des conditions ci-dessus, le procédé comprend en outre : la réception d'une instruction d'ajustement de chemin, l'instruction d'ajustement de chemin étant déterminée en fonction du fichier multimédia photographié ; la détermination d'un second chemin de navigation du scooter sur la base de l'instruction d'ajustement de chemin ; et la commande du scooter pour qu'il se rende au lieu de planification cible en fonction du second chemin de navigation.

2. Procédé selon la revendication 1, dans lequel, lorsqu'il y a au moins deux scooters, la commande d'au moins deux scooters pour qu'il se rendent au lieu de planification cible selon le premier chemin de navigation comprend :
déterminer un mode de planification correspondant à un état de la route, dans lequel l'état de la route est un état de route d'une route à travers laquelle passe le premier chemin de navigation ; et
amener, selon le mode de planification, les au moins deux scooters à se rendre au lieu de planification cible selon le premier chemin de navigation.

3. Procédé selon la revendication 2, dans lequel la détermination du mode de planification correspondant à l'état de la route comprend au moins l'une des opérations suivantes :
lorsque l'état de la route est un état dans lequel une densité de foule est supérieure à une première valeur prédéterminée et/ou une densité de véhicule est supérieure à une seconde valeur prédéterminée, déterminer que le mode de planification correspondant à l'état de la route est le mode de planification de véhicule unique, le mode de planification de véhicule unique étant un mode de planification séquentielle des au moins deux scooters ;
lorsque l'état de la route est un état dans lequel la densité de foule n'est pas supérieure à la première valeur prédéterminée et la densité de véhicule n'est pas supérieure à la seconde valeur prédéterminée, déterminer que le mode de planification correspondant à l'état de la route est le mode de planification par lots, le mode de planification par lots étant un mode de planification simultanée des au moins deux scooters.

4. Procédé selon la revendication 3, dans lequel, lorsque le mode de planification correspondant à l'état de la route est déterminé comme étant le mode de planification par lots, la commande, selon le mode de planification, des au moins deux scooters pour qu'ils se rendent au lieu de planification cible selon le premier chemin de navigation comprend :
déterminer, en fonction des premières positions géographiques des au moins deux scooters, une file d'attente coulissante ; et
amener, en fonction de la file d'attente coulissante et du premier chemin de navigation, les au moins deux scooters à se rendre au lieu de planification cible.

5. Procédé selon la revendication 1, dans lequel, avant de déterminer la première position géographique du scooter à planifier, le procédé comprend en outre au moins l'une des étapes suivantes :
déterminer le scooter en fonction d'une instruction de sélection d'entrée ;
déterminer le scooter en fonction d'une densité de scooters dans une zone de stationnement de scooters ;
déterminer une zone de planification en fonction d'une distance entre une zone de stationnement de scooter et le lieu de planification cible, et déterminer le scooter dans la zone de planification.

6. Procédé selon la revendication 1, dans lequel la détermination de la première position géographique du scooter à planifier comprend :
déterminer la première position géographique du scooter en fonction des données rapportées par un système de positionnement global, GPS, monté sur le scooter.

7. Procédé selon la revendication 6, dans lequel la détermination de la première position géographique du scooter en fonction des données rapportées par le GPS monté sur le scooter comprend :
déterminer la première position géographique du scooter en fonction des données rapportées périodiquement par le GPS monté sur le scooter ; ou,
envoyer une demande d'obtention de position au scooter, recevoir des informations de position du scooter renvoyées par le GPS monté sur le scooter lors du déclenchement de la demande d'obtention de position, et déterminer la première position géographique du scooter sur la base des informations de position.

8. Procédé selon la revendication 7, dans lequel après avoir déterminé la première position géographique du scooter selon les données rapportées périodiquement par le GPS monté sur le scooter, le procédé comprend en outre :
indiquer au scooter de photographier des images dans le champ de vision d'une caméra avec la caméra et de télécharger un fichier multimédia photographié et de corriger la première position géographique en fonction du fichier multimédia.

9. Appareil de planification de scooter, comprenant :
un premier module de détermination, configuré pour déterminer une première position géographique d'un scooter à planifier et une seconde position géographique d'un lieu de planification cible du scooter ;
un deuxième module de détermination, configuré pour déterminer un premier chemin de navigation du scooter sur la base de la première position géographique et de la deuxième position géographique ; et
un module de commande, configuré pour commander le scooter afin qu'il se rende au lieu de planification cible en fonction du premier chemin de navigation,
dans lequel le scooter a une capacité de conduite automatique ;
dans lequel l'appareil est en outre configuré pour exécuter les opérations suivantes dans un processus dans lequel le scooter est amené à se rendre au lieu de planification cible selon le premier chemin de navigation : détecter l'apparition d'au moins l'une des conditions suivantes : une distance à laquelle un chemin de conduite du scooter est dévié du premier chemin de navigation est supérieure à une troisième valeur prédéterminée, une durée pendant laquelle le scooter a arrêté de glisser est supérieure à une quatrième valeur prédéterminée, le scooter ne se déplace pas vers le lieu de planification cible dans une plage de temps spécifiée ; et indiquer au scooter de photographier des images dans le champ de vision d'une caméra avec la caméra et de télécharger un fichier multimédia photographié pour déterminer l'au moins une des conditions ci-dessus ;
dans lequel l'appareil est en outre configuré pour recevoir, après avoir indiqué au scooter de photographier des images dans le champ de vision d'une caméra avec la caméra et de télécharger un fichier multimédia photographié pour déterminer l'au moins une des conditions ci-dessus, une instruction d'ajustement de chemin, l'instruction d'ajustement de chemin étant déterminée en fonction du fichier multimédia photographié ; déterminer un second chemin de navigation du scooter sur la base de l'instruction d'ajustement de chemin ; et commander le scooter pour qu'il se rende au lieu de planification cible en fonction du second chemin de navigation.

10. Appareil selon la revendication 9, dans lequel l'unité de détermination est configurée pour déterminer le mode de planification correspondant à l'état de la route en exécutant au moins l'une des opérations suivantes :
lorsque l'état de la route est un état dans lequel une densité de foule est supérieure à une première valeur prédéterminée et/ou une densité de véhicule est supérieure à une seconde valeur prédéterminée, déterminer que le mode de planification correspondant à l'état de la route est le mode de planification de véhicule unique, le mode de planification de véhicule unique étant un mode de planification séquentielle des au moins deux scooters ;
lorsque l'état de la route est un état dans lequel la densité de foule n'est pas supérieure à la première valeur prédéterminée et la densité de véhicule n'est pas supérieure à la seconde valeur prédéterminée, déterminer que le mode de planification correspondant à l'état de la route est le mode de planification par lots, le mode de planification par lots étant un mode de planification simultanée des au moins deux scooters.

11. Support d'informations, le support d'informations stockant un programme informatique ; et le programme informatique est configuré pour exécuter l'un quelconque des procédés selon les revendications 1 à 8.

12. Appareil électronique, comprenant le support d'informations selon la revendication 11, dans lequel l'appareil électronique comprend en outre un processeur ; et le processeur est configuré pour exécuter le programme informatique pour qu'il mette en oeuvre l'un quelconque des procédés selon les revendications 1 à 8.
